# EUROPÄISCHE PATENTSCHRIFT

(11) **EP 0 870 590 B1**
(45) Veröffentlichungstag und Bekanntmachung des Hinweises auf die Patenterteilung: **20.03.2002**
(21) Anmeldenummer: 98106011.4
(22) Anmeldetag: 02.04.1998
(51) Int. Cl.: B29C 45/50

(54) **Einspritzaggregat für Spritzgiessmaschinen**
Injection unit for injection moulding machines
Unité d'injection pour machines à mouler par injection

(30) Priorität: 09.04.1997 AT 21197
(43) Veröffentlichungstag der Anmeldung: 14.10.1998
(73) Patentinhaber: ENGEL MASCHINENBAU GESELLSCHAFT MBH, A-4311 Schwertberg (AT)
(72) Erfinder: Eppich, Stefan, 4341 Arbing (AT); Kappelmüller, Werner, 4311 Schwertberg (AT)
(74) Vertreter: Torggler, Paul Norbert, Dr.

(56) Entgegenhaltungen:
- EP-A- 0 247 208
- EP-A- 0 639 444
- DE-A- 19 809 014

## Beschreibung

Die Erfindung betrifft ein Einspritzaggregat für Spritzgießmaschinen mit einem Plastifizierzylinder und einer darin drehbar und durch zwei gegenläufige Kurbeln axial verschiebbar angeordnete Plastifizierschnecke.

Bei einer bekannten derartigen Einrichtung (vgl. EP 0 639 444) treibt ein einziger Motor zwei durch ein Getriebe synchronisierte Kurbeltriebe an. Ein weiterer Motor dient dazu, während des Plastifiziervorganges die Plastifizierschnecke zu drehen. Einen ähnlichen Aufbau zeigt DE 198 09 014 A1.

Die zum Vorschieben der Plastifizierschnecke erforderlichen Kräfte, durch welche der Kunststoff in die Form eingespritzt wird, liegen typischerweise zwischen 100 und 1000 kN. Bei Kräften in dieser Größenordnung stellt die Einsparung eines Motors nur einen scheinbaren Vorteil dar. Der konstruktive und damit wirtschaftliche Aufwand wird geringer, wenn zwei Motoren vorgesehen sind, die jeweils die Hälfte der Einspritzkraft aufbringen können, wie dies für eine mittels Spindeln angetriebene Plastifizierschnecke in EP 0 247 208 A1 beschrieben ist. Durch einen derartigen Aufbau wird ein kompliziertes Synchronisationsgetriebe eingespart, da die Synchronisation von Elektromotoren durch eine einfache elektrische Regeleinrichtung erfolgen kann.

Die Erfindung geht von der Überlegung aus, daß zur Drehung der Plastifizierschnecke während des Plastifiziervorganges wesentlich geringere Kräfte notwendig sind als zum Einspritzen des Kunststoffes, so daß man mit insgesamt zwei Motoren für das Plastifizieren und Einspritzen des Kunststoffes das Auslangen finden kann. Dazu wird erfindungsgemäß vorgesehen, daß jede Kurbel von einem eigenen, als Elektromotor ausgebildeten Antriebsmotor angetrieben wird, wobei einer der Antriebsmotore wahlweise entweder die Plastifizierschnecke dreht oder diese vorschiebt.

Während des Plastifiziervorganges dreht somit einer der beiden Motoren die Plastifizierschnecke, wogegen der andere zur Aufbringung des im Vergleich zum Spritzdruck minimalen Staudruckes zur Verfügung steht.

Eine zweckmäßige Weiterbildung der Erfindung ist begenstand des abhängigen Anspruchs.

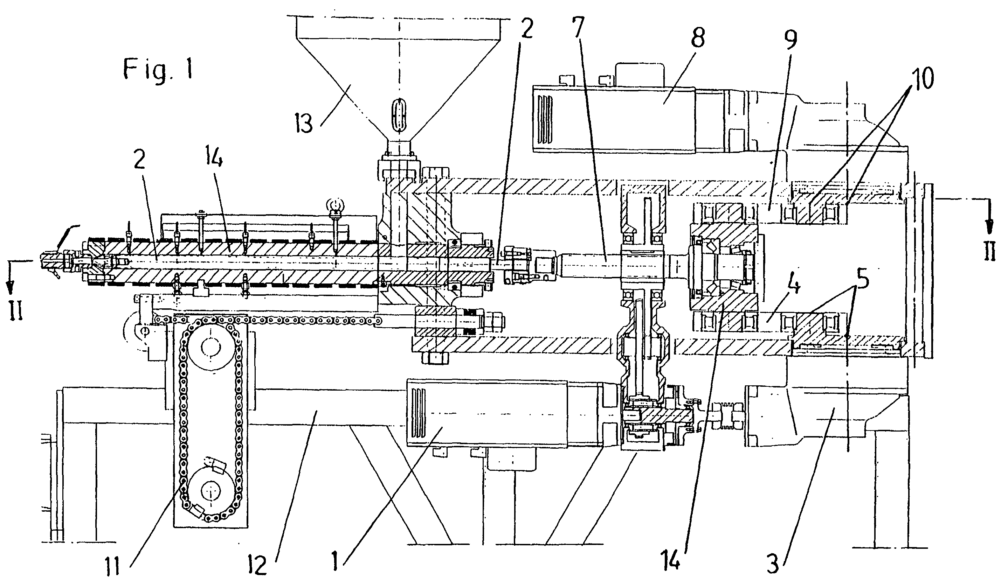

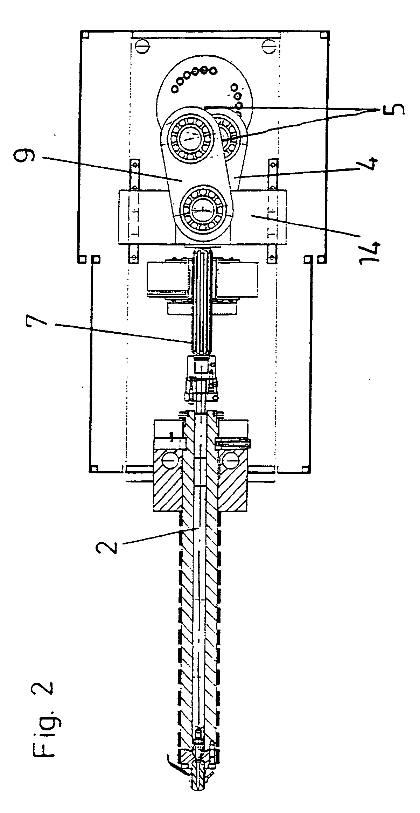

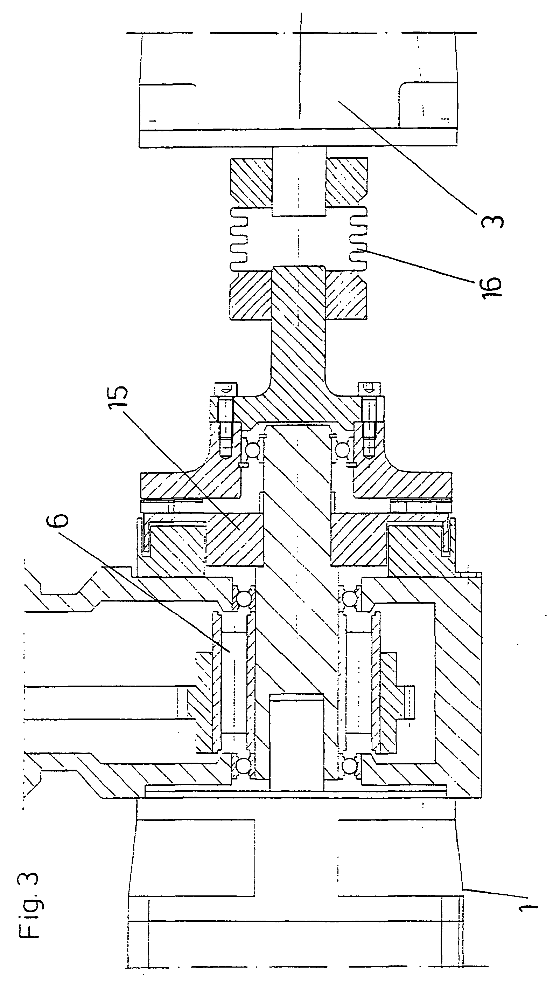

Weitere Einzelheiten der Erfindung werden anschließend anhand der Zeichnung erläutert. In dieser ist Fig. 1 ein Schnitt durch die vertikale Längsmittelebene des Einspritzaggregates einer Spritzgießmaschine, Fig. 2 die Draufsicht auf einen Schnitt nach der Linie II-II in Fig. 1, Fig. 3 eine Darstellung der Kraftableitung des Antriebsmotors 1.

Das in Fig. 1 dargestellte Spritzaggregat ist mittels eines Kettentriebes 11 gegenüber einem Grundgerüst 12 in im Detail nicht dargestellter Weise verfahrbar, um an eine Spritzgießform herangeführt bzw. von dieser entfernt werden zu können. Granulierter Kunststoff ist über einen Aufgabetrichter 13 einer Plastifizierschnecke 2 zuführbar, welche in einem Plastifizierzylinder 14 drehbar und längsverschiebbar gelagert ist.

Zur Drehung der Plastifizierschnecke 2 dient der Antriebsmotor 1, welcher über eine Freilaufkupplung 6 mit der die Plastifizierschnecke 2 fortsetzenden Mehmutwelle 7 verbunden ist. Während die Plastifizierschnecke 2 gedreht wird, kann sie sich also gegenüber dem Motor 1 nach rechts in Fig. 1 verschieben. Während dieser Verschiebung wird durch den Motor 8 über die zugehörige Kurbel 10 mittels der Schubstange 9 der Staudruck (in der Größenordnung von 5 - 10 bar) auf die Plastifizierschnecke 2 aufgebracht.

Um nach Beendigung des Plastifiziervorganges mittels beider Motoren 1 und 8 bzw. über beide Kurbeln 5 und 10 sowie Schubstangen 4 und 9 (vgl. Fig. 2) die Plastifizierschnecke in die in Fig. 2 dargestellte vorderste Lage drücken zu können, ist der Abtrieb des Antriebsmotors 1. wie in Fig. 3 dargestellt, ausgebildet: die Verbindung zur Mehrnutwelle 7 erfolgt über eine Freilaufkupplung 6. Der Antriebsmotor 1 ist also in einer Drehrichtung drehschlüssig mit der Mehmutwelle 7 verbunden, in der anderen Drehrichtung von dieser gelöst. Die Verbindung des Antriebsmotors 1 mit dem Winkelgetriebe 3 erfolgt hingegen über eine elektromagnetische Kupplung 15, welche aus- und eingeschaltet werden kann, und über eine dauernd wirksame Metallbelagkupplung 16. Während des Plastifiziervorganges. wenn also der Antriebsmotor 1 mit der Mehrnutwelle 7 über miteinander kämmende Zahnräder in Angriff steht, ist die Kupplung 15 ausgeschaltet. Während des Einspritzvorganges wird die Drehrichtung des Antriebsmotors 1 umgekehrt. Dadurch wird der Freilauf 6 wirksam, sodaß es zu keiner Drehung der Plastifizierschnecke mehr kommt. Der Antriebsmotor 1 wird über die Kupplung 15 mit dem Winkelgetriebe 3 verbunden und bewegt die Schubstange 4 spiegelbildlich zur Schubstange 9 nach vorne.

Statt des dargestellten reversiblen Antriebsmotors 1 könnte ein gleichsinnig umlaufender Motor verwendet werden, welcher wahlweise mittels zweier schaltbarer Kupplungen entweder mit der Mehrnutwelle 7 oder dem Winkelgetriebe 3 in Verbindung gebracht wird. Auch in diesem Fall besteht die Möglichkeit, zum Vorschieben der Plastifizierschnecke zwei Motoren verwenden zu können, von denen wenigstens einer auch während des Plastifiziervorganges einsetzbar ist.

In Abweichung vom dargestellten Ausführungsbeispiel ist es ohne weiteres möglich, den Antriebsmotor 1 lediglich zur Betätigung der Kurbel 5 mit der Schubstange 4 zu verwenden und die Drehung der Mehmutwelle 7 einem gesonderten dritten Antriebsmotor zu übertragen.

## Patentansprüche

1. Einspritzaggregat für Spritzgießmaschinen mit einem Plastifizierzylinder (14) und einer darin drehbar und durch zwei gegenläufige Kurbeln (5,10) axial verschiebbar angeordnete Plastifizierschnecke (2), **dadurch gekennzeichnet, daß** jede Kurbel (5,10) von einem eigenen, als Elektromotor ausgebildeten Antriebsmotor (1,8) angetrieben wird, wobei einer der Antriebsmotore (1) wahlweise entweder die Plastifizierschnecke (2) dreht oder diese vorschiebt.

2. Einspritzaggregat nach Anspruch 1, **dadurch gekennzeichnet, daß** der wahlweise die Plastifizierschnecke (2) drehende oder vorschiebende Antriebsmotor (1) reversibel ist und mit der Plastifizierschnecke (2) über ein Freilaufgetriebe (6) und eine Mehrnutwelle (7) gekoppelt ist.

## Claims

1. An injection unit for injection moulding machines comprising a plasticising cylinder (14) and a plasticising screw (2) which is arranged rotatably therein and axially displaceably by two oppositely movable cranks (5, 10) **characterised in that** each crank (5, 10) is driven by its own drive motor (1, 8) which is in the form of an electric motor, wherein one of the drive motors (1) selectively either rotates or advances the plasticising screw (2).

2. An injection unit according to claim 1 **characterised in that** the drive motor (1), which selectively either rotates or advances the plasticising screw (2), is reversible and coupled to the plasticising screw (2) by way of a freewheel transmission (6) and a multi-spline shaft (7).

## Revendications

1. Unité d'injection pour machines à mouler par injection, comportant un cylindre de plastification (14) et une vis de plastification (2), disposée dans ce cylindre avec liberté de rotation et de coulissement axial sous l'action de deux manivelles (5, 10) tournant à contre-avance, **caractérisée par le fait que** chaque manivelle (5, 10) est entraînée par un moteur d'entraînement (1, 8) propre, conçu en tant que moteur électrique, dans lequel l'un des moteurs d'entraînement (1), au choix, soit entraîne en rotation la vis de plastification (2) soit la fait coulisser.

2. Unité d'injection selon la revendication 1, **caractérisée par le fait que** le moteur d'entraînement (1), qui, au choix, entraîne en rotation ou fait coulisser la vis de plastification (2) est réversible et qu'il est couplé à la vis de plastification (2) par l'intermédiaire d'un mécanisme à roue libre (8) et d'un arbre cannelé (7).
